# EUROPEAN PATENT APPLICATION

(11) **EP 4 772 567 A1**
(43) Date of publication of application: **08.07.2026**
(21) Application number: 24859382.4
(22) Date of filing: 06.08.2024
(51) Int. Cl.: C08L 1/02, C08L 101/00

(54) **CELLULOSE FIBER COMPOSITE RESIN COMPOSITION, MOLDED OBJECT OF CELLULOSE FIBER COMPOSITE RESIN, AND PRODUCTION METHODS THEREFOR**

(30) Priority: 29.08.2023 JP 2023139134
(71) Applicant: Panasonic Intellectual Property Management Co., Ltd., Kadoma-shi, Osaka 571-0057 (JP)
(72) Inventor: IMANISHI, Masayoshi, Kadoma-shi, Osaka 571-0057 (JP); HAMABE, Masashi, Kadoma-shi, Osaka 571-0057 (JP); NAGINO, Toshifumi, Kadoma-shi, Osaka 571-0057 (JP); NISHINO, Shouma, Kadoma-shi, Osaka 571-0057 (JP)
(74) Representative: Novagraaf International SA
(86) International application number: PCT/JP2024/028137
(87) International publication number: WO 2025/047342

(57) **Abstract**

A cellulose fiber composite resin composition including: a base resin; a cellulose fiber; a low molecular weight resin; and a crosslinking agent capable of forming a crosslinked structure in at least two of: "within the base resin", "within the low molecular weight resin", and "between the base resin and the low molecular weight resin".

## Description

### TECHNICAL FIELD

The present disclosure relates to a cellulose fiber composite resin composition, a molded object, and a production method.

### BACKGROUND ART

So-called "general-purpose plastics" such as polyethylene (PE), polypropylene (PP), polystyrene (PS), and polyvinyl chloride (PVC) have characteristics of being relatively inexpensive, having a weight as small as a fraction of the weight of metal or ceramics, and being easy to process such as molding. Therefore, general-purpose plastics are used as materials of various daily commodities such as bags, various packaging, various containers, and sheets, and industrial components such as automobile components and electrical components, daily necessities, and miscellaneous goods.

However, general-purpose plastics have disadvantages such as insufficient mechanical strength. Therefore, general-purpose plastics do not have sufficient properties required for materials used for various industrial products including machine products such as automobiles and electric/electronic/information products, and the application range thereof is currently limited.

On the other hand, so-called "engineering plastics" such as polyacetal (POM), polyamide (PA), polycarbonate (PC), and fluororesin are excellent in mechanical properties, and are used for various industrial products including machine products such as automobiles, and electric/electronic/information products. However, engineering plastics have problems of being expensive, difficult to recycle monomers, and imposing a large environmental load.

Therefore, there has been a demand for greatly improving the material properties (mechanical strength and the like) of general-purpose plastics. As a method for improving the material properties of general-purpose plastics, a technique for producing a composite resin by blending two or more types of resins or additives such as fillers is known. In particular, natural fibers, glass fibers, carbon fibers, and the like, which are fibrous fillers, are used for the purpose of improving the mechanical strength. Among them, organic fibrous fillers such as cellulose have attracted attention in recent years as reinforcing fibers because they are inexpensive and excellent in environmental properties at the time of disposal.

When the addition amount of fibrous fillers is increased, the mechanical strength of a composite resin is improved, but the fluidity thereof is greatly reduced. Due to the reduced fluidity, filling defects, appearance defects, and the like occur during molding, and moldability deteriorates. In PTL 1, a low-molecular weight wax is used to coat the surface of cellulose-based powder, thereby improving moldability.

### Citation List

### Patent Literature

PTL 1: Japanese Patent Publication No. 3167020

### SUMMARY OF THE INVENTION

However, since the composite resin described in PTL 1 uses a low-molecular weight wax, there is a problem that the low-molecular weight wax alone has low strength, and therefore the strength of the entire composite resin decreases.

The present disclosure is intended to solve the above-mentioned conventional problems, and an object of the present disclosure is to provide a cellulose fiber composite resin composition having good fluidity during molding and having high strength after molding.

The cellulose fiber composite resin composition according to the present disclosure includes: a base resin; a cellulose fiber; a low molecular weight resin; and a crosslinking agent capable of forming a crosslinked structure in at least two of: "within the base resin", "within the low molecular weight resin", and "between the base resin and the low molecular weight resin".

The cellulose fiber composite resin composition according to the present disclosure, containing a low molecular weight resin, has high fluidity during molding. On the other hand, after molding, the cellulose fiber composite resin composition, containing a crosslinking agent, can form a crosslinked structure in the base resin and/or the low molecular weight resin through radiation exposure to obtain a cellulose fiber composite resin molded object having high strength.

### BRIEF DESCRIPTION OF THE DRAWINGS

Fig. 1 is a schematic view showing the structure of a cellulose fiber composite resin composition according to the first exemplary embodiment.
Fig. 2 is a chart showing conditions and measurement results in Examples 1 to 4 and Comparative Example 1.

### DESCRIPTION OF EMBODIMENTS

Hereinafter, the cellulose fiber composite resin composition and the cellulose fiber composite resin molded object according to the exemplary embodiment will be described with reference to the accompanying drawings. In the following description, the same components are denoted by the same reference marks, and the description thereof is appropriately omitted.

A cellulose fiber composite resin composition according to a first aspect includes: a base resin; a cellulose fiber; a low molecular weight resin; and a crosslinking agent capable of forming a crosslinked structure in at least two of: "within the base resin", "within the low molecular weight resin", and "between the base resin and the low molecular weight resin".

A cellulose fiber composite resin composition according to a second aspect is the cellulose fiber composite resin composition in the first aspect, in which the low molecular weight resin and the base resin may have a common basic structure.

A cellulose fiber composite resin composition according to a third aspect is the cellulose fiber composite resin composition in the first or second aspect, in which the cellulose fiber may be contained in an amount of 10 mass% or more and 90 mass% or less based on the entire cellulose fiber composite resin composition.

A cellulose fiber composite resin composition according to a fourth aspect is the cellulose fiber composite resin composition in any one of the first to third aspects, in which the cellulose fiber may have an average particle diameter of 10 µm or more and 500 µm or less.

A cellulose fiber composite resin composition according to a fifth aspect is the cellulose fiber composite resin composition in any one of the first to fourth aspects, in which the low molecular weight resin may have a weight average molecular weight of 1000 or more and 50000 or less.

A cellulose fiber composite resin composition according to a sixth aspect is the cellulose fiber composite resin composition in any one of the first to fifth aspects, in which the cellulose fiber may include a cellulose fiber whose extending direction is bent at 90° or more in a middle based on a longitudinal direction in a number ratio of 1% or more and 30% or less.

A cellulose fiber composite resin composition according to a seventh aspect is the cellulose fiber composite resin composition in any one of the first to fifth aspects, in which the low molecular weight resin may be contained in an amount of 0.5 mass% or more and 20 mass% or less based on 100 mass% of a total amount of the base resin, the cellulose fiber, the low molecular weight resin, and the crosslinking agent.

A method for producing a cellulose fiber composite resin composition according to an eighth aspect includes: a mixing step of adhering a low molecular weight resin having a lower molecular weight than a base resin and having a powdery form or a liquid form to a cellulose fiber; and a step of kneading the base resin; the cellulose fiber; the low molecular weight resin; and a crosslinking agent capable of forming a crosslinked structure in at least two of: "within the base resin", "within the low molecular weight resin", and "between the base resin and the low molecular weight resin" to form a cellulose fiber composite resin composition.

A cellulose fiber composite resin molded object according to a ninth aspect is made from a cellulose fiber composite resin composition containing a base resin; a cellulose fiber; a low molecular weight resin; and a crosslinking agent, wherein the molded object has a crosslinked structure through the crosslinking agent in at least two of: "within the base resin", "within the low molecular weight resin", and "between the base resin and the low molecular weight resin".

A cellulose fiber composite resin molded object according to a tenth aspect is the cellulose fiber composite resin molded object in the ninth aspect, in which the cellulose fiber composite resin molded object may have a gel fraction of 10% or more.

A method for producing a cellulose fiber composite resin molded object according to an eleventh aspect includes: a step of kneading a base resin; a cellulose fiber; a low molecular weight resin; and a crosslinking agent to obtain a cellulose fiber composite resin composition; a step of molding the cellulose fiber composite resin composition to obtain a molded object; and a step of exposing the molded object to radiation to form a crosslinked structure through the crosslinking agent in at least two of: "within the base resin", "within the low molecular weight resin", and "between the base resin and the low molecular weight resin".

A method for producing a cellulose fiber composite resin molded object according to a twelfth aspect is the method for producing a cellulose fiber composite resin molded object in the eleventh aspect, in which the low molecular weight resin and the base resin may have a common basic structure.

A method for producing a cellulose fiber composite resin molded object according to a thirteenth aspect is the method for producing a cellulose fiber composite resin molded object in the eleventh or twelfth aspect, in which the cellulose fiber may be contained in an amount of 10 mass% or more and 90 mass% or less based on the entire cellulose fiber composite resin molded object.

A method for producing a cellulose fiber composite resin molded object according to a fourteenth aspect is the method for producing a cellulose fiber composite resin molded object in any one of the eleventh to thirteenth aspects, in which the cellulose fiber may have an average particle diameter of 10 µm or more and 500 µm or less.

A method for producing a cellulose fiber composite resin molded object according to a fifteenth aspect is the method for producing a cellulose fiber composite resin molded object in any one of the eleventh to fourteenth aspects, in which the low molecular weight resin may have a weight average molecular weight of 1000 or more and 50000 or less.

A method for producing a cellulose fiber composite resin molded object according to a sixteenth aspect is the method for producing a cellulose fiber composite resin molded object in any one of the eleventh to fifteenth aspects, in which the cellulose fiber may include a cellulose fiber whose extending direction is bent at 90° or more based on a longitudinal direction in a number ratio of 1% or more and 30% or less.

A method for producing a cellulose fiber composite resin molded object according to a seventeenth aspect is the method for producing a cellulose fiber composite resin molded object in any one of the eleventh to sixteenth aspects, in which the low molecular weight resin may be contained in an amount of 0.5 mass% or more and 20 mass% or less based on 100 mass% of a total amount of the base resin, the cellulose fiber, the low molecular weight resin, and the crosslinking agent.

A method for producing a cellulose fiber composite resin molded object according to an eighteenth aspect is the method for producing a cellulose fiber composite resin molded object in any one of the eleventh to seventeenth aspects, further including: a mixing step of adhering a low molecular weight resin having a powdery form or a liquid form to the cellulose fiber.

A method for producing a cellulose fiber composite resin molded object according to a nineteenth aspect is the method for producing a cellulose fiber composite resin molded object in any one of the eleventh to eighteenth aspects, in which the cellulose fiber composite resin molded object may have a gel fraction of 10% or more.

Hereinafter, the cellulose fiber composite resin composition and the cellulose fiber composite resin molded object according to the exemplary embodiment will be described with reference to the drawings. In the following description, the same components are denoted by the same reference marks, and the description thereof is appropriately omitted.

(First exemplary embodiment)

### <Cellulose fiber composite resin composition>

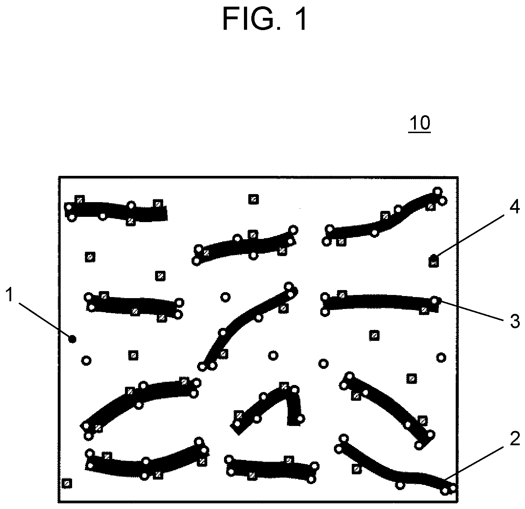

Fig. 1 is a schematic view showing the configuration of cellulose fiber composite resin composition 10 according to the first exemplary embodiment.

Composite resin 10 according to the first exemplary embodiment includes base resin 1, cellulose fiber 2, low molecular weight resin 3, and crosslinking agent 4. In cellulose fiber composite resin composition 10, as shown in Fig. 1, cellulose fiber 2, low molecular weight resin 3, and crosslinking agent 4 are dispersed in the matrix of base resin 1, and low molecular weight resin 3 is present around cellulose fiber 2. The crosslinking agent is capable of forming a crosslinked structure in at least two of: "within the base resin", "within the low molecular weight resin", and "between the base resin and the low molecular weight resin".

Cellulose fiber composite resin composition 10, containing low molecular weight resin 3, has high fluidity during molding. On the other hand, after molding, cellulose fiber composite resin composition 10, containing crosslinking agent 4, can form a crosslinked structure in base resin 1 and/or low molecular weight resin 3 through radiation exposure to obtain a cellulose fiber composite resin molded object having high strength and high heat resistance and suppressed in bleeding out.

Cellulose fiber composite resin composition 10 may be a fluid or a solid, and may have, for example, a lump shape, a rectangular shape, or a pellet shape for storage and distribution.

Hereinafter, each member constituting cellulose fiber composite resin composition 10 will be described.

### <Base resin>

In the first exemplary embodiment, base resin 1 is preferably a thermoplastic resin in order to ensure good moldability. Examples of the thermoplastic resin include olefin-based resins (including cyclic olefin-based resins), styrene-based resins, (meth) acrylic resins, organic acid vinyl ester-based resins or derivatives thereof, vinyl ether-based resins, halogen-containing resins, polycarbonate-based resins, polyester-based resins, polyamide-based resins, thermoplastic polyurethane resins, polysulfone-based resins (such as polyethersulfone and polysulfone), polyphenylene ether-based resins (such as polymers of 2,6-xylenol), cellulose derivatives (such as cellulose esters, cellulose carbamates, and cellulose ethers), silicone resins (such as polydimethylsiloxane and polymethylphenylsiloxane), and rubbers or elastomers (such as diene rubbers including polybutadiene and polyisoprene, styrene-butadiene copolymers, acrylonitrile-butadiene copolymers, acrylic rubbers, urethane rubbers, and silicone rubbers). The resin may be used alone or in combination of two or more thereof. The resin is not limited to the above materials as long as it has thermoplasticity.

Among these thermoplastic resins, base resin 1 is preferably a resin capable of forming a crosslinked structure through radiation exposure, or a resin capable of forming a crosslinked structure through radiation exposure with the added crosslinking agent. The radiation includes electron beam, gamma ray, and the like, and electron beam exposure is mainly used in the present application. Examples of the resin capable of forming a crosslinked structure through radiation exposure or through radiation exposure with the added crosslinking agent include olefin-based resins, polyamide resins, and polylactic acid resins. The resin may be used alone or in combination of two or more thereof. The resin is not limited to the above materials as long as it is a resin capable of forming a crosslinked structure through radiation exposure with the added crosslinking agent.

### <Cellulose fiber>

In the first exemplary embodiment, examples of cellulose fiber 2 include a cellulose fiber and a lignocellulose fiber. Examples of the raw material of the cellulose fiber and the lignocellulose fiber include natural materials such as wood (needle-leaved tree, broad-leaved tree), cotton linters, kenaf, Manila hemp (abaca), sisal hemp, jute, sabai grass, esparto grass, bagasse, rice straw, straw, reed, and bamboo.

The content of cellulose fiber 2 is preferably 10 mass% or more and 90 mass% or less. When the content is 90 mass% or less, the content of the cellulose fiber is suppressed, so that the cellulose fiber composite resin composition flows and can be molded. When the content is 10 mass% or more, the effect of forming a crosslinked structure at low energy due to the presence of the cellulose fiber can be sufficiently exhibited. Therefore, the content of the cellulose fiber is preferably 10 mass% or more and 90 mass% or less, more preferably 30 mass% or more and 90 mass% or less, and still more preferably 50 mass% or more and 90 mass% or less.

The average particle diameter of cellulose fiber 2 is preferably 10 µm or more and 500 µm or less, and more preferably 20 µm or more and 400 µm or less. When the average particle diameter of the cellulose fiber is 500 µm or less, the cellulose fibers are less likely to come into contact with each other, and aggregates are less likely to be formed. When the average particle diameter is 10 µm or more, the surface area of the cellulose fiber can be suppressed, so that the fluidity of the cellulose fiber composite resin composition is improved. Therefore, the average particle diameter of the cellulose fiber is preferably 10 µm or more and 500 µm or less, and more preferably 20 µm or more and 400 µm or less.

The cellulose fiber preferably includes a cellulose fiber whose extending direction is bent at 90° or more in the middle based on the longitudinal direction in a number ratio of 1% or more and 30% or less. When the cellulose fiber whose extending direction is bent at 90° or more in the middle is included in a number ratio of 30% or less, the bent cellulose fibers are less likely to come into contact with each other and less likely to be entangled, so that aggregates are less likely to be formed. When the cellulose fiber whose extending direction is bent at 90° or more in the middle is included in a number ratio of 1% or more, there are bent cellulose fibers so that entanglement between the crosslinked structure of the resin and the cellulose fiber can be formed. Therefore, the ratio of the cellulose fiber whose extending direction is bent at 90° or more in the middle is preferably within the above range.

### <Low molecular weight resin>

In the first exemplary embodiment, low molecular weight resin 3 is required to be melted during kneading, and therefore is preferably a thermoplastic resin. Examples of the thermoplastic resin include olefin-based resins (including cyclic olefin-based resins), styrene-based resins, (meth) acrylic resins, organic acid vinyl ester-based resins or derivatives thereof, vinyl ether-based resins, halogen-containing resins, polycarbonate-based resins, polyester-based resins, polyamide-based resins, thermoplastic polyurethane resins, polysulfone-based resins (such as polyethersulfone and polysulfone), polyphenylene ether-based resins (such as polymers of 2,6-xylenol), cellulose derivatives (such as cellulose esters, cellulose carbamates, and cellulose ethers), silicone resins (such as polydimethylsiloxane and polymethylphenylsiloxane), rubbers or elastomers (such as diene rubbers including polybutadiene and polyisoprene, styrene-butadiene copolymers, acrylonitrile-butadiene copolymers, acrylic rubbers, urethane rubbers, and silicone rubbers), and waxes. The resin may be used alone or in combination of two or more thereof. The resin is not limited to the above materials as long as it has thermoplasticity.

Among these thermoplastic resins, low molecular weight resin 3 is preferably a resin capable of forming a crosslinked structure through radiation exposure, or a resin capable of forming a crosslinked structure through radiation exposure with the added crosslinking agent. The radiation includes electron beam, gamma ray, and the like, and electron beam exposure is mainly used in the present application. Examples of the resin capable of forming a crosslinked structure through radiation exposure or through radiation exposure with the added crosslinking agent include olefin-based resins, polyamide resins, and polylactic acid resins. The resin may be used alone or in combination of two or more thereof. The resin is not limited to the above materials as long as it is a resin capable of forming a crosslinked structure through radiation exposure with the added crosslinking agent.

Low molecular weight resin 3 has a lower molecular weight than the base resin, and may have a basic structure in common with the base resin. When the base resin and the low molecular weight resin have different structures, crosslinked structures are easily preferentially formed within the base resin or within the low molecular weight resin at the time of forming a crosslinked structure upon radiation exposure. When a crosslinked structure is preferentially formed within the base resin, the low molecular weight resin is less likely to form a crosslinked structure, and it is difficult to suppress deterioration of strength and heat resistance. When a crosslinked structure is preferentially formed within the low molecular weight resin, promotion of polymerization through crosslinking is delayed since the crosslinked structure is within the low molecular weight resin, and it is difficult to suppress deterioration of strength and heat resistance. Therefore, the low molecular weight resin and the base resin preferably have a common basic structure. Thereby, a crosslinked structure can be formed between the base resin and the low molecular weight resin.

Note that "have a common basic structure" means having a portion constituted by common monomer units. That is, this means that the base resin and the low molecular weight resin have a portion with the same molecular repeating structure.

The low molecular weight resin is preferably contained in an amount of 0.5 mass% or more and 20 mass% or less based on 100 mass% of the total amount of the base resin, the cellulose fiber, the low molecular weight resin, and the crosslinking agent. When the low molecular weight resin is contained in an amount of 0.5 mass% or more, the amount of the low molecular weight resin is sufficient, and therefore the composite resin can be improved in fluidity and molded, and can be molded under conditions other than high temperatures. When the low molecular weight resin is contained in an amount of 20 mass% or less, the amount of the low molecular weight resin is not too large, and therefore it is possible to suppress the decrease in the strength of the cellulose fiber composite resin composition. Therefore, the low molecular weight resin is preferably contained in an amount of 0.5 mass% or more and 20 mass% or less based on 100 mass% of the total amount of the base resin, the cellulose fiber, the low molecular weight resin, and the crosslinking agent.

The molecular weight of low molecular weight resin 3 is preferably 1000 or more and 50000 or less, and more preferably 3000 or more and 30000 or less. When the molecular weight is 1000 or more, the strength of the resin alone is sufficient, and therefore it is possible to suppress the reduction of the strength of the entire cellulose fiber composite resin composition. When the molecular weight is 50000 or less, the viscosity of the low molecular weight resin alone is not too high, and therefore it is possible to improve the fluidity of the cellulose fiber composite resin. Therefore, the molecular weight of low molecular weight resin 3 is preferably within the above range.

The "molecular weight" means "weight average molecular weight". The weight average molecular weight was measured using gel permeation chromatography (GPC). For the mobile phase for GPC, since the soluble liquid component varies depending on resin, an appropriate material is selected for each resin. For example, σ-dichlorobenzene may be used as the mobile phase for polyolefin.

Cellulose fiber composite resin composition 10 contains the low molecular weight resin. Therefore, the cellulose fiber composite resin composition can have high fluidity, even though the cellulose fiber is contained. On the other hand, since the crosslinking agent is contained, after molding, the molded object can be exposed to radiation to form a crosslinked structure, and the strength and heat resistance can be improved, even though the low molecular weight resin is contained. Therefore, cellulose fiber composite resin composition 10 is preferably made of at least the base resin, the cellulose fiber, the low molecular weight resin, and the crosslinking agent.

### <Crosslinking agent>

In the first exemplary embodiment, crosslinking agent 4 is preferably a polyfunctional crosslinking agent having two or more reactive groups in the molecule. By adding the crosslinking agent, the crosslinking reaction is likely to occur uniformly. Examples of the polyfunctional crosslinking agent include triacyl isocyanurate (TAIC), triallyl cyanurate (TAC), and divinylbenzene (DVB). The crosslinking agent is not limited to the above materials as long as it is polyfunctional. For example, a modified cellulose fiber may be used.

### <Additive>

The cellulose fiber composite resin composition can contain various additives in addition to the various materials described above. For example, when the cellulose fiber composite resin composition is produced, maleic anhydride polypropylene (dispersant) can be added in addition to polypropylene (base resin), ground pulp (cellulose fiber), low molecular weight polypropylene (low molecular weight resin), and triacyl isocyanurate (crosslinking agent).

The average particle diameter can be measured by, for example, a measurement method such as a sieving method (JIS K 0069:1992), a laser diffraction/scattering method (JIS Z 8825:2013), or a dynamic light scattering method (JIS Z 8828:2013). In the sieving method, sieving is performed using two or more sieves different from each other in coarseness, and the particle diameter distribution is measured from the residual weight on each sieve. In the laser diffraction/scattering method, particles in a liquid or gas are irradiated with laser light, and the particle diameter is measured using the fact that the intensity pattern of scattered light scattered by the particles depends on the particle diameter. In the laser diffraction/scattering method, the diameter is measured as a spherical equivalent diameter. In the dynamic light scattering method, the particle diameter is measured by utilizing the Brownian motion of particles floating in a liquid. That is, a phase shift between the scattered light and the incident light caused by the Brownian motion is observed, and the particle diameter is calculated from the observed phase shift.

As the average particle diameter, for example, the median diameter D₅₀ at which the cumulative frequency in the obtained particle diameter distribution is 50% may be used. The above average particle diameter is shown using a median diameter D₅₀.

### <Method for producing cellulose fiber composite resin composition>

The method for producing a cellulose fiber composite resin composition includes a step of kneading a base resin; a cellulose fiber; a low molecular weight resin; and a crosslinking agent to form a cellulose fiber composite resin composition (kneading step). The crosslinking agent is capable of forming a crosslinked structure in at least two of: "within the base resin", "within the low molecular weight resin", and "between the base resin and the low molecular weight resin". Further, the method for producing a cellulose fiber composite resin composition may include a mixing step of adhering a low molecular weight resin having a powdery form or a liquid form to cellulose fiber 2. When a low molecular weight resin having a powdery form or a liquid form is adhered to the surface of the cellulose fiber before the kneading step, the cellulose fibers are less likely to come into direct contact with each other, so that aggregation of the cellulose fibers can be suppressed. When the low molecular weight resin adheres to the surface of the cellulose fiber, resistance during flow due to the cellulose fiber is suppressed, and the fluidity is improved. As the shape of the low molecular weight resin, when a resin pellet is used, the size thereof is significantly larger than that of the cellulose fiber. Therefore, even when the low molecular weight resin of the resin pellet and the cellulose fiber are mixed, the components are separated, and therefore the low molecular weight resin cannot adhere to the cellulose fiber. Therefore, low molecular weight resin 3 having a powdery form or a liquid form may be used. Further, before the kneading step, a mixing step between the cellulose fiber and the low molecular weight resin having a powdery form or a liquid form may be performed.

In the kneading step of the method for producing a cellulose fiber composite resin composition, examples of the kneading apparatus to be used include a uniaxial kneader, a biaxial kneader, a roll kneader, a kneader, a Banbury mixer, and a combination thereof. From the viewpoint of easy application of high shear and high mass productivity, a continuous biaxial kneader and a continuous roll kneader are preferable. A kneading method other than the above may be used as long as high shear stress can be applied. In addition, the cellulose fiber is preferably kneaded at a temperature as low as possible because the cellulose fiber is easily deteriorated due to heat.

### <Cellulose fiber composite resin molded object>

The cellulose fiber composite resin molded object according to the first exemplary embodiment is made from a cellulose fiber composite resin composition containing a base resin; a cellulose fiber; a low molecular weight resin; and a crosslinking agent. The cellulose fiber composite resin molded object has a crosslinked structure through the crosslinking agent in at least two of: "within the base resin", "within the low molecular weight resin", and "between the base resin and the low molecular weight resin".

The gel fraction of the cellulose fiber composite resin molded object is preferably 10% or more, more preferably 30% or more, and still more preferably 50% or more. The gel fraction is an index with which the degree of the crosslinked structures of the base resin and the low molecular weight resin can be estimated. When the gel fraction is 10% or more, the low molecular weight resin can form a crosslinked structure, so that the strength of the composite resin can be improved. Therefore, the gel fraction of the cellulose fiber composite resin molded object is preferably 10% or more.

The cellulose fiber composite resin molded object, having the crosslinked structure estimated by the gel fraction, has excellent mechanical strength.

### <Method for producing cellulose fiber composite resin molded object>

The method for producing a cellulose fiber composite resin molded object according to the first exemplary embodiment is, for example, as follows.
(1) First, a base resin; a cellulose fiber; a low molecular weight resin; and a crosslinking agent are kneaded to obtain a cellulose fiber composite resin composition (kneading step).

The kneading step is substantially the same as the kneading step of the method for producing a cellulose fiber composite resin composition. Therefore, examples of the kneading apparatus to be used in the kneading step include a uniaxial kneader, a biaxial kneader, a roll kneader, a kneader, a Banbury mixer, and a combination thereof. From the viewpoint of easy application of high shear and high mass productivity, a continuous biaxial kneader and a continuous roll kneader are preferable. A kneading method other than the above may be used as long as high shear stress can be applied. In addition, the cellulose fiber is preferably kneaded at a temperature as low as possible because the cellulose fiber is easily deteriorated due to heat.

The composite resin composition extruded from the kneading apparatus is prepared in a pellet form through a cutting process such as a pelletizer. The pelletizing method includes a method of performing pelletization immediately after melting the resin, examples of which include an air hot cut method, an underwater hot cut method, and a strand cut method. Alternatively, there is also a pulverization method in which a molded object or a sheet is once molded and then pulverized and cut.

(2) Next, the obtained cellulose fiber composite resin composition is molded to obtain a molded object.

The molded object is produced by molding the pellets. Examples of the molding method include injection molding, extrusion molding, compression molding, and hollow molding.

(3) Next, the molded object is exposed to radiation to obtain a cellulose fiber composite resin molded object in which a crosslinked structure is formed in at least two of: "within the base resin", "within the low molecular weight resin", and "between the base resin and the low molecular weight resin".

The molded object is exposed to radiation to form a crosslinked structure in at least two of: "within the base resin", "within the low molecular weight resin", and "between the base resin and the low molecular weight resin". Examples of the apparatus to be used for radiation exposure include an electron beam exposure apparatus. For suppressing radiation damage to the material, an apparatus other than the above may be used as long as the apparatus enables radiation exposure with relatively low energy of 300 kGy or less.

As described above, the cellulose fiber composite resin molded object is obtained.

In the method for producing a cellulose fiber composite resin molded object, the low molecular weight resin is contained in the step of obtaining a cellulose fiber composite resin composition so that the composite resin can be improved in fluidity and thereby molded. When the crosslinking agent is contained, the crosslinked structure between the base resin and the low molecular weight resin can be uniformly formed upon radiation exposure. Therefore, the method for producing a cellulose fiber composite resin molded object preferably includes: a step of kneading a base resin; a cellulose fiber; a low molecular weight resin; and a crosslinking agent to obtain a cellulose fiber composite resin composition; and a step of performing radiation exposure to a molded object obtained by molding the cellulose fiber composite resin composition to obtain a cellulose fiber composite resin molded object in which a crosslinked structure is formed in at least two of: "within the base resin", "within the low molecular weight resin", and "between the base resin and the low molecular weight resin".

Hereinafter, examples and comparative examples performed by the inventors will be described.

### (Examples 1 to 4 and Comparative Example 1)

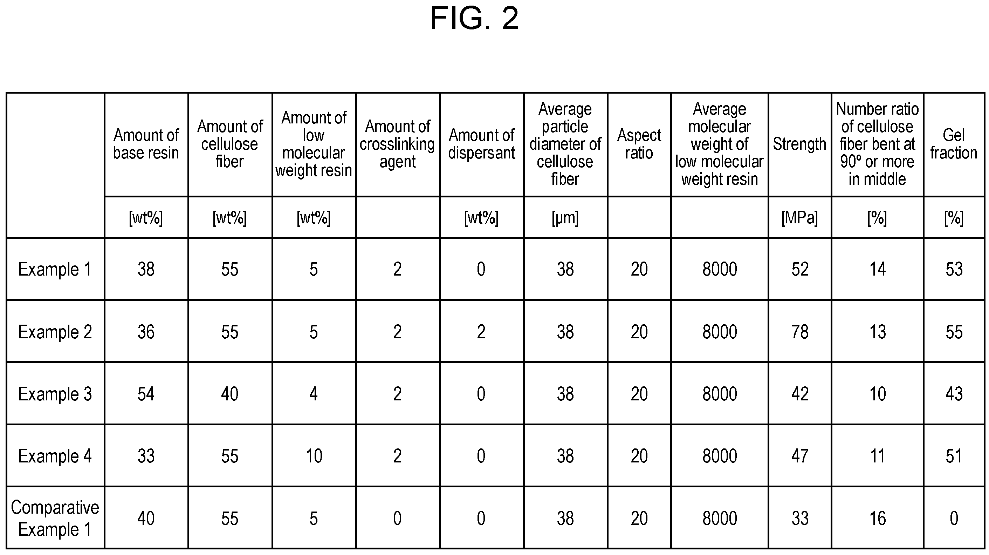

Fig. 2 is a chart showing conditions and measurement results in Examples 1 to 4 and Comparative Example 1.

A cellulose fiber composite resin composition and a cellulose fiber composite resin molded object were produced by the following production method. As described above, examples of the kneading apparatus to be used include a uniaxial kneader, a biaxial kneader, a roll kneader, a kneader, a Banbury mixer, and a combination thereof. In the examples, a biaxial kneader was used.

Polypropylene (trade name: BC03C, manufactured by Japan Polypropylene Corporation) as the base resin, a ground pulp as the cellulose fiber, a low molecular weight polyolefin (trade name: Hi-Wax, manufactured by Mitsui Chemicals, Inc.) as the low molecular weight resin, and triallyl isocyanate (manufactured by Mitsubishi Chemical Corporation) as the crosslinking agent were used, and weighed at 38 : 55 : 5 : 2 in terms of mass ratio. The base resin; and a mixture of the ground pulp, the low molecular weight resin, and the crosslinking agent were separately supplied into the kneader. A broad-leaved tree pulp (product name: Mitsubishi Kitakami LBKP, manufactured by MITSUBISHI PAPER MILLS LIMITED) was used as a starting material for the ground pulp. The pulp was pulverized by a pulverizer to obtain the ground pulp. The size of the cellulose fiber and the like were adjusted by the pulverization process. The pulverization method is preferably dry pulverization because wet pulverization needs a drying process after pulverization and aggregation occurs during the drying.

The mixture was melt-kneaded and dispersed with a biaxial kneader (KRC kneader, manufactured by Kurimoto, Ltd.). The shearing force can be changed by changing the screw configuration of the biaxial kneader. In Example 1, the low-shear type specification was adopted. The cellulose fiber composite resin composition discharged from the biaxial kneader was hot-cut to produce a cellulose fiber composite resin pellet made of the cellulose fiber composite resin composition.

A test piece of the composite resin molded object was prepared using the prepared cellulose fiber composite resin pellet with an injection molding machine (180AD, manufactured by The Japan Steel Works, Ltd.). The preparation conditions of the dumbbell test piece were a resin temperature of 200°C, a mold temperature of 40°C, an injection speed of 60 mm/s, and a holding pressure of 100 MPa. The pellets were bitten by the screw of the molding machine via the hopper, and the biting performance at that time was measured as the pellet decrease amount per hour, and it was confirmed that the biting performance was constant. The shape of the test piece was changed according to the evaluation items described below, and a No. 1 size dumbbell test piece was prepared for measuring the elastic modulus.

The prepared test piece of the cellulose fiber composite resin composition was exposed to electron beam, using an electron beam exposure apparatus. The electron beam exposure conditions were adjusted so that the exposure was performed with an electron beam having an energy amount of 30 kGy at an acceleration voltage of 4.6 MV and a current of 20 mA. Thus, the test piece of the cellulose fiber composite resin molded object was obtained.

The obtained test piece of the cellulose fiber composite resin molded object was evaluated by the following methods.

### [Evaluation items of composite resin molded object]

### (Strength of composite resin molded object)

A three-point bending test was performed using the obtained No. 1 dumbbell-shaped test piece. The elastic modulus of the test piece was 52 MPa.

### (Evaluation of bending degree of cellulose fiber in composite resin molded object)

From the obtained No. 1 dumbbell-shaped test piece, a part thereof was cut out for SEM observation. The cellulose fiber in the resin included a cellulose fiber whose extending direction was bent at 90° or more in the middle based on the longitudinal direction in a number ratio of 14%.

### (Gel fraction)

From the obtained No. 1 dumbbell-shaped test piece, a part thereof was cut out for the evaluation of gel fraction, which is an index for the degree of crosslinking. With reference to JIS K6796, the test piece cut out therefrom was weighed, wrapped in wire mesh, and immersed in a flask containing a solvent for about 8 hours. Thereafter, the test piece was taken out, dried, and weighed, and the gel fraction was calculated from the mass ratio before and after immersion. The denominator of the mass ratio is the mass excluding the mass of the cellulose fiber and the like other than the base resin and the low molecular weight resin. The gel fraction of the test piece was 53%.

### (Example 2)

In Example 2, maleic anhydride-modified polypropylene (trade name: UMEX, manufactured by Sanyo Chemical Industries, Ltd.) as a dispersant was used, and the mass ratio of base resin : cellulose fiber : low molecular weight resin : crosslinking agent : dispersant was changed to 36 : 55 : 5 : 2 : 2. A cellulose fiber composite resin pellet and a molded object were prepared under the same conditions as in Example 1 except for the above. The evaluation was performed in the same manner as in Example 1.

### (Example 3)

In Example 3, the addition amount of the cellulose fiber was reduced as compared with Example 1, and the mass ratio of base resin : cellulose fiber : low molecular weight resin : crosslinking agent was changed to 54 : 40 : 2. A cellulose fiber composite resin pellet and a molded object were prepared under the same material conditions and process conditions as in Example 1 except for the above. The evaluation was performed in the same manner as in Example 1.

### (Example 4)

In Example 4, the addition amount of the low molecular weight resin was increased as compared with Example 1, and the mass ratio of base resin : cellulose fiber : dispersant : low molecular weight resin : crosslinking agent was changed to 33 : 55 : 10 : 2. A cellulose fiber composite resin pellet and a molded object were prepared under the same material conditions and process conditions as in Example 1 except for the above. The evaluation was performed in the same manner as in Example 1.

### (Comparative Example 1)

In Comparative Example 1, the crosslinking agent was not added, and the mass ratio of base resin : ground pulp : dispersant : crosslinking agent was changed to 40 : 55 : 5 : 0. A composite resin pellet and a molded object were prepared under the same material conditions and process conditions as in Example 1 except for the above. The evaluation was performed in the same manner as in Example 1.

The measurement results in Examples 1 to 4 and Comparative Example 1 are shown in the table in Fig. 2.

In Example 2, where a dispersant was used, the compatibility between the cellulose fiber and the resin was improved as compared with Example 1, and therefore, the strength was 78 MPa.

In Example 3, where the addition amount of the cellulose fiber was reduced, the cellulose fiber concentration was lower than that in Example 1, the reinforcing effect by the cellulose fiber was reduced, and the effect of promoting crosslinking by radiation exposure at low energy was also reduced, and therefore, the strength was 42 MPa.

In Example 4, where the addition amount of the low molecular weight resin was increased, the fluidity was further improved as compared with Example 1. On the other hand, through the crosslinking effect, the decrease in strength due to the increased addition amount of the low molecular weight resin was suppressed, and therefore, the strength was 47 MPa.

In Comparative Example 1, where no crosslinking agent was used, the crosslinking agent was not contained, and therefore crosslinking did not proceed, and the strength was 33 MPa.

From the above evaluation, adding the crosslinking agent made it possible that crosslinking was promoted, the decrease in strength by adding the low molecular weight resin was suppressed, and the strength of the cellulose fiber composite resin molded object satisfied a required level.

As described above, the cellulose fiber composite resin composition containing the base resin, the cellulose fiber, the low molecular weight resin, and the crosslinking agent obtains high fluidity during molding. In addition, when radiation exposure is performed after molding to form a crosslinked structure in at least two of: "within the base resin", "within the low molecular weight resin", and "between the base resin and the low molecular weight resin", the obtained cellulose fiber composite resin molded object has increased mechanical strength.

### INDUSTRIAL APPLICABILITY

The cellulose fiber composite resin composition according to the present disclosure has high fluidity during molding, and can provide a molded object after molding, the molded object being more excellent in mechanical strength and heat resistance than conventional general-purpose resins. The cellulose fiber composite resin molded object obtained by using the cellulose fiber composite resin composition according to the present disclosure can be used for external components that require excellent mechanical strength and heat resistance, such as housings of household electric appliances, building materials, and automobile components.

### REFERENCE MARKS IN THE DRAWINGS

- 1: base resin
- 2: cellulose fiber
- 3: low molecular weight resin
- 4: crosslinking agent
- 10: cellulose fiber composite resin composition

## Claims

1. A cellulose fiber composite resin composition comprising:
a base resin; a cellulose fiber; a low molecular weight resin; and
a crosslinking agent capable of forming a crosslinked structure in at least two of: "within the base resin", "within the low molecular weight resin", and "between the base resin and the low molecular weight resin".

2. The cellulose fiber composite resin composition according to claim 1,
wherein the low molecular weight resin and the base resin have a common basic structure.

3. The cellulose fiber composite resin composition according to claim 1,
wherein the cellulose fiber is contained in an amount of 10 mass% or more and 90 mass% or less based on the entire cellulose fiber composite resin composition.

4. The cellulose fiber composite resin composition according to claim 1,
wherein the cellulose fiber has an average particle diameter of 10 µm or more and 500 µm or less.

5. The cellulose fiber composite resin composition according to claim 1,
wherein the low molecular weight resin has a weight average molecular weight of 1000 or more and 50000 or less.

6. The cellulose fiber composite resin composition according to claim 1,
wherein the cellulose fiber includes a cellulose fiber whose extending direction is bent at 90° or more in a middle based on a longitudinal direction in a number ratio of 1% or more and 30% or less.

7. The cellulose fiber composite resin composition according to claim 1,
wherein the low molecular weight resin is contained in an amount of 0.5 mass% or more and 20 mass% or less based on 100 mass% of a total amount of the base resin, the cellulose fiber, the low molecular weight resin, and the crosslinking agent.

8. A method for producing a cellulose fiber composite resin composition, the method comprising:
a mixing step of adhering a low molecular weight resin having a lower molecular weight than a base resin and having a powdery form or a liquid form to a cellulose fiber; and
a step of kneading the base resin; the cellulose fiber; the low molecular weight resin; and a crosslinking agent capable of forming a crosslinked structure in at least two of: "within the base resin", "within the low molecular weight resin", and "between the base resin and the low molecular weight resin" to form a cellulose fiber composite resin composition.

9. A cellulose fiber composite resin molded object made from a cellulose fiber composite resin composition containing a base resin; a cellulose fiber; a low molecular weight resin; and a crosslinking agent, wherein
the molded object has a crosslinked structure through the crosslinking agent in at least two of: "within the base resin", "within the low molecular weight resin", and "between the base resin and the low molecular weight resin".

10. The cellulose fiber composite resin molded object according to claim 9, wherein the cellulose fiber composite resin molded object has a gel fraction of 10% or more.

11. A method for producing a cellulose fiber composite resin molded object, the method comprising:
a step of kneading a base resin; a cellulose fiber; a low molecular weight resin; and a crosslinking agent to obtain a cellulose fiber composite resin composition;
a step of molding the cellulose fiber composite resin composition to obtain a molded object; and
a step of exposing the molded object to radiation to form a crosslinked structure through the crosslinking agent in at least two of: "within the base resin", "within the low molecular weight resin", and "between the base resin and the low molecular weight resin".

12. The method for producing a cellulose fiber composite resin molded object according to claim 11, wherein the low molecular weight resin and the base resin have a common basic structure.

13. The method for producing a cellulose fiber composite resin molded object according to claim 11, wherein the cellulose fiber is contained in an amount of 10 mass% or more and 90 mass% or less based on the entire cellulose fiber composite resin molded object.

14. The method for producing a cellulose fiber composite resin molded object according to claim 11, wherein the cellulose fiber has an average particle diameter of 10 µm or more and 500 µm or less.

15. The method for producing a cellulose fiber composite resin molded object according to claim 11, wherein the low molecular weight resin has a weight average molecular weight of 1000 or more and 50000 or less.

16. The method for producing a cellulose fiber composite resin molded object according to claim 11, wherein the cellulose fiber includes a cellulose fiber whose extending direction is bent at 90° or more based on a longitudinal direction in a number ratio of 1% or more and 30% or less.

17. The method for producing a cellulose fiber composite resin molded object according to claim 11, wherein the low molecular weight resin is contained in an amount of 0.5 mass% or more and 20 mass% or less based on 100 mass% of a total amount of the base resin, the cellulose fiber, the low molecular weight resin, and the crosslinking agent.

18. The method for producing a cellulose fiber composite resin molded object according to claim 11, further comprising:
a mixing step of adhering a low molecular weight resin having a powdery form or a liquid form to the cellulose fiber.

19. The method for producing a cellulose fiber composite resin molded object according to claim 11, wherein the cellulose fiber composite resin molded object has a gel fraction of 10% or more.
